Europäisches Patentamt

European Patent Office

Office européen des brevets

(11) Publication number: **0 087 876**
**B1**

(12) **EUROPEAN PATENT SPECIFICATION**

(45) Date of publication of patent specification: **23.07.86**

(51) Int. Cl.⁴: **F 16 D 55/224**

(21) Application number: **83300691.9**

(22) Date of filing: **11.02.83**

(54) Disc brake caliper assembly.

(30) Priority: **01.03.82 US 353530**

(43) Date of publication of application:
**07.09.83 Bulletin 83/36**

(45) Publication of the grant of the patent:
**23.07.86 Bulletin 86/30**

(84) Designated Contracting States:
**DE FR GB**

(56) References cited:
**DE-A-1 625 809**
**FR-A-2 129 559**
**GB-A-1 373 622**
**GB-A-2 049 846**
**US-A-2 531 341**
**US-A-2 799 367**
**US-A-3 999 635**

(73) Proprietor: **GENERAL MOTORS CORPORATION**
**General Motors Building 3044 West Grand**
**Boulevard**
**Detroit Michigan 48202 (US)**

(72) Inventor: **Warwick, Edward H.**
**208 Katy Lane**
**Englewood Ohio 45322 (US)**

(74) Representative: **Breakwell, John Neil Bower**
**et al**
**GM Patent Section Luton Office (F6) P.O. Box**
**No. 3 Kimpton Road**
**Luton Beds. LU2 OSY (GB)**

Courier Press, Leamington Spa, England.

# Description

This invention relates to a disc brake assembly as specified in the preamble of claim 1, for example as disclosed in US—A—2 531 341.

The present invention is concerned with achieving a construction which allows the disc brake assembly to be made lighter in weight than similar-capacity disc brake assemblies currently on the automotive market, and also to provide for additional usable brake lining material as compared with disc brake assemblies currently in common use.

For this purpose a disc brake assembly in accordance with the present invention is characterised by the features specified in the characterising portion of claim 1.

Thus in contrast to what is disclosed in US—A—2 531 341, the piston that is slidably mounted in the caliper recess may be made of the friction material.

The dependent claims 2 and 3 relate to advantageous preferred features of a disc brake assembly in accordance with the invention.

If the lining material is of a type that may be adversely affected by hydraulic brake fluid, a piston cap (in accordance with claim 2) is provided to ensure separation of the hydraulic brake fluid and the piston. However, if the lining material is capable of co-existence with the hydraulic brake fluid used, without any adverse effect on the lining material, the piston cap may be omitted.

The use of a clip (in accordance with claim 3) to retain the first brake friction material on the second leg is effective to hold this brake lining in position and yet permit removal and replacement of the lining as necessary.

US—A—2 799 367 discloses a disc brake assembly having an apply piston actuable to brake the disc, the piston being formed of the brake friction material.

In the drawings:

Figure 1 is a fragmentary elevation, with parts broken away and in elevation, of a preferred embodiment of a disc brake assembly in accordance with the present invention;

Figure 2 is a fragmentary sectional view of the disc brake assembly of Figure 1, on the line 2—2 of Figure 1, in the direction of the arrows; and

Figure 3 is a fragmentary view, partially in section with parts broken away, of the disc brake assembly of Figure 1, on the line 3—3 of Figure 1, in the direction of the arrows.

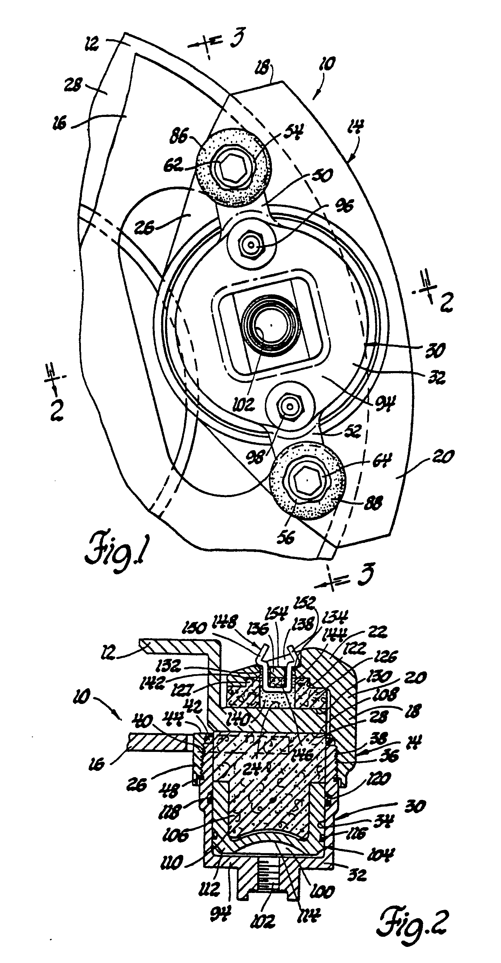

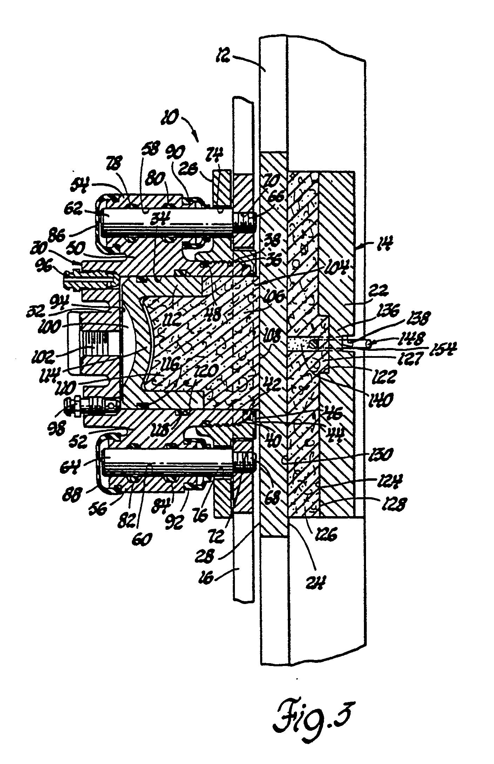

In the drawings, a disc brake assembly 10 is illustrated as being generally of a type in current production on automotive vehicles, with modifications in conformity with the invention. The disc brake assembly 10 includes a rotatable disc 12 to be braked, a caliper assembly 14, and a mounting bracket 16 on which the caliper assembly is slidably mounted. Braking torque is transmitted from the caliper assembly through the mounting bracket to a fixed portion of the vehicle, for example a steering knuckle or a part of a rear axle.

The caliper assembly 14 includes a caliper 18 generally formed to provide a bridge section 20 extending over the outer periphery of an arcuate portion of the disc 12, an outboard caliper leg 22 extending along the outboard disc surface 24 in spaced relation thereto, and an inboard caliper leg 26 extending along the inboard disc surface 28 in spaced relation thereto. A hydraulic actuating cylinder assembly 30 includes provision for slidably mounting the caliper assembly 14 on the mounting bracket 16. The cylinder assembly 30 includes a housing 32 having a cylinder 34 formed therein, and the outboard end of the housing 32 has external threads 36 formed thereon and threaded into mating internal threads 38 formed in an opening 40 in the inboard caliper leg 26. A seal 42, which acts as a dust seal, is provided between the end surface 44 of the cylinder housing 32 and a lip 46 formed as a part of the caliper leg 26 at the outboard edge of the opening 40. Another seal 48 is provided near the inboard side of the opening 40 to protect the threads 35 and 38; the seal 48 may also act as a locking seal.

The housing 32 has mounting arms 50 and 52 extending therefrom in diametrically opposite directions generally parallel to the disc 12 and mounting bracket 16. The outer ends of these arms are formed as bosses 54 and 56 through which respective bores 58 and 60 are formed, parallel to the axis of rotation of the disc 12. Respective mounting pins 62 and 64 are received through the bores 58 and 60, and the outboard ends 66 and 68 of the pins are threaded into respective openings 70 and 72 formed through the mounting bracket 16. The pins also extend freely through openings 74 and 76 formed in the inboard caliper leg 26 so that the caliper leg does not contact the pins. Retracting and adjusting seals 78 and 80 are located in the bore 58, and similar seals 82 and 84 are located in the bore 60, these seals being located in grooves which permit adjusting and retracting action on the pins 62 and 64, as is known in the art. Outer boots 86 and 88 and inner boots 90 and 92 are fitted over the ends of the bores 58 and 60, to protect the sliding surfaces of the pins and bores against contamination.

The inboard end of the cylinder 34 is closed by an end wall 94. Bleeder valves 96 and 98 are fitted at locations in the end wall such that one of the bleeder valves is positioned at the top of a pressure chamber 100, located in the cylinder 34 adjacent the end wall 94, when the brake is installed on a vehicle. An inlet 102 is formed through the end wall 94, and provides a connection for delivery of hydraulic brake fluid to the chamber 100 when the brake is actuated.

A piston assembly 104 is reciprocably received in the cylinder 34. In the particular construction illustrated, the piston assembly 104 includes a piston 106 that is made of braking lining material and extends outwardly through the open end of the cylinder 34 so that the friction braking surface 108 of the piston is engageable with the disc surface 28 when the brake is actuated. The seal may lightly engage the outboard portion of the piston 106 to prevent dust from entering the cylinder 34. The inboard end 110 of the piston 106 is slightly reduced in diameter so as to receive a cup-shaped piston cap 112. The piston cap 112 has an end portion 114 which forms one wall of the pressure chamber 100, and the cap is provided with a seal 116 which seals against the side wall of the cylinder 34. The cap 112 also has an annular wall portion which extends in an outboard direction sufficiently far to be engaged by a retracting and adjusting seal 118; the seal 118 is received in a groove 120 that is formed in the wall of the cylinder 34 and is shaped to permit an adjusting and retracting action of seal 118, in a manner well known in the art.

The hydraulic brake fluid mainly used in automotive vehicles at present is not compatible with brake lining materials having organic components, such that use of the piston cap 112 is desirable. However, it is within the scope of the invention to use a lining material and hydraulic brake fluid which are compatible, whereby the piston cap 112 can be omitted and the entire piston assembly 104, except for the seals, can be made of lining material. This may be accomplished, for example, by the use of certain metallic, semi-metallic or ceramic friction braking materials, and/or by the use of other types of hydraulic brake fluid. By way of example, a silicone-based brake fluid may be compatible with some lining materials.

The outboard caliper leg 22 is provided with a recess 122 on the side thereof facing the disc surface 24, and the leg surface 124 in which the recess 122 is formed is shaped to receive an outboard lining 126 in substantially full surface engagement with the outer surface 128 of the lining 126. The lining 126 has a button-like boss 127 which fits into the recess 122. No backing plate or brake shoe is provided, the outboard lining 126 being mounted directly to the caliper leg 22 so that the lining friction braking surface 130 is in position for braking engagement with the disc surface 24. Spaced holes 132 and 134 are formed through the bottom wall 136 of the recess 122 and open into an outwardly extending recess 138 formed in the caliper leg 22. The brake lining 126 has a recess 140 formed through its friction braking surface 130 in alignment with the boss 127 so that holes 142 and 144 formed in the bottom wall 146 of the recess 140 and through the boss 126 are in alignment with the holes 132 and 134. A generally U-shaped clip 148 is inserted through the recess 140 and the aligned holes 142, 132 and 144, 134, and the clip legs 150 and 152 are bent to engage the bottom surface 154 of the recess 138 to hold the brake lining 126 in position, and yet permit removal and replacement of the lining as necessary.

The construction herein disclosed and claimed permits a light-weight disc brake caliper assembly by the elimination of inboard and outboard brake shoe assembly backing plates, and by the provision of a potentially light-weight cylinder housing, since this can be made of a light metal such as aluminum, with the caliper bridge and legs being made of a much stronger material. The construction also results in having additional lining material available without an increase in the exterior dimensions of the caliper, thereby increasing the working life between lining replacements.

**Claims**

1. A disc brake assembly having a rotatable disc (12) to be braked and a caliper assembly (14) including an apply piston (106) actuable to brake the disc, in which the piston (106) is formed of brake friction material, a caliper housing (18) is formed to provide first and second legs (26 and 22) positioned on opposed friction braking surface sides of the disc (12) and a bridge section (20) extends peripherally across the disc and interconnects the legs (26 and 22), a hydraulic cylinder (32) having a recess (34) formed therein defines a hydraulic pressure chamber (100), a caliper mounting arms (50 and 52) on the cylinder (32) extend outwardly and radially and provide slidable mounting means for slidably mounting and guiding the caliper assembly (14) for movement in directions parallel to the axis of rotation of the disc (12), and first brake friction material forming a brake lining (126) is secured directly on to the second leg (22) for selective braking engagement with a friction braking surface (24) on one side of the disc (12), characterised in that the first leg (26) has an internally threaded aperture (38, 40) positioned on an axis parallel to the axis of rotation of the disc (12), the hydraulic cylinder (32) has an externally threaded open end (36) threaded into the internally threaded aperture (38, 40) to secure the cylinder (32) to the caliper housing (18), and second brake friction material forming a piston (106) is slidably mounted in the caliper recess (34) and is reciprocably movable therein in response to hydraulic brake actuating pressure in the hydraulic pressure chamber (100), to engage a friction braking surface (28) on the other side of the disc (12) when the brake assembly is actuated.

2. A disc brake assembly according to claim 1, characterised in that the second brake friction material forming a piston (106) is separated from hydraulic brake fluid in the pressure chamber (100) by means of a piston cap (112).

3. A disc brake assembly according to claim 1 or 2, characterised in that the first brake friction material forming a brake lining (126) is removably secured directly on to the second leg (22) and retained thereon by means of a retainer clip (148).

**Patentansprüche**

1. Scheibenbremsanordnung mit einer drehbaren abzubremsenden Scheibe (12) und einer Sattelanordnung (14) mit einem Andrückkolben (106), der zum Bremsen der Scheibe betätigbar ist, wobei der Kolben (106) aus Brems-Reibmaterial gebildet ist, ein Sattelgehäuse (18) ausgebildet ist zur Schaffung erster und zweiter Schenkel (26 und 22) die an einander gegenüberliegenden Reibbrems-Flächenseiten der Scheibe (12) angeordnet sind und ein Brückenabschnitt (20) sich in Umfangsrichtung über die Scheibe erstreckt und die Schenkel (26 und 22) miteinander verbindet, ein Hydraulikzylinder (32) mit einer darin ausgebildeten Vertiefung (34) eine hydraulische Druckkammer (100) bestimmt, Sattel-Befestigungsarme (50 und 52) an dem Zylinder (32) sich nach außen und radial erstrecken und gleitbare Befestigungsmittel zum gleitbaren Anbringen und Führen der Sattelanordnung (14) zu einer Bewegung in Richtungen parallel zur Drehachse der Scheibe (12) schaffen, und erstes, einen Bremsbelag (126) bildendes Bremsreibmaterial direkt an den zweiten Schenkel (22) zum wahlweisen Bremseingriff mit einer Reibbremsfläche (24) an einer Seite der Scheibe (12) befestigt ist, dadurch gekennzeichnet, daß der erste Schenkel (26) einen mit Innengewinde versehenen Durchbruch (38, 40) besitzt, der an einer zur Drehachse der Scheibe (12) parallelen Achse angeordnet ist, daß der Hydraulikzylinder (32) ein mit Außengewinde versehenes offenes Ende (36) besitzt, das in den mit Innengewinde versehenen Durchbruch (38, 40) eingeschraubt ist, um den Zylinder (32) an dem Sattelgehäuse (18) sicher anzubringen, und daß zweites einen Kolben (106) bildendes Bremsreibmaterial gleitbar in der Vertiefung (34) des Bremssattels angebracht und darin hin- und herbewegbar ist in Reaktion auf hydraulischen Bremsbetätigungsdruck in der hydraulischen Druckkammer (100) um an einer Reibbremsfläche (28) an der anderen Seite der Scheibe (12) anzulegen, wenn die Bremsanordnung betätigt ist.

2. Scheibenbremsanordnung nach Anspruch 1, dadurch gekennzeichnet, daß das zweite, einen Kolben (106) bildende Bremsreibmaterial mittels eines Kolbendeckels (112) von dem hydraulischen Bremsfluid in der Druckkammer (100) getrennt ist.

3. Scheibenbremsanordnung nach Anspruch 1 oder 2, dadurch gekennzeichnet, daß das erste, einen Bremsbelag (126) bildende Bremsreibmaterial entfernbar direkt an den zweiten Schenkel (22) sicher befestigt und mittels eines Halteclips (148) daran gehalten ist.

**Revendications**

1. Ensemble de frein à disque constitué d'un disque rotatif (12) qu'il s'agit de freiner et d'un ensemble étrier (14) qui comprend un piston de serrage (106) pouvant être mis en action pour freiner le disque dont le piston (106) est fait d'une matière de friction pour freins, un corps d'étrier (18) conformé de manière à présenter d'une part une première et une deuxième branches (26 et 22) positionnées sur des faces opposées formant les surfaces de freinage par friction du disque (12), et d'autre part une partie pont (80) qui relie les branches (26 et 22) et qui s'étend le long de la périphérie du disque qu'il chevauche, un cylindre hydraulique (32) pourvu d'un évidement (34) définissant une chambre de pression hydraulique (100), des bras de montage de l'étrier (50 et 52) disposés sur le cylindre (32) et dirigés radialement vers l'extérieur pour servir de moyens de montage à coulissement pour monter à glissement l'ensemble étrier (14) et le guider dans des déplacements parallèles à l'axe de rotation du disque (12), et une première matière de friction pour frein qui forme une garniture de frein (126) fixée directement sur la deuxième branche (22) pour entrer sélectivement en contact pour le freinage avec une surface de freinage par friction (24) située sur une face du disque (12), caractérisé en ce que la première branche (26) présente une ouverture (38, 40) filetée intérieurement position-née sur un axe parallèle à l'axe de rotation du disque (12), en ce que le cylindre hydraulique (32) présent une extrémité ouverte (36) filetée extérieurement vissée dns l'ouverture filetée intérieurement (38, 40) pour fixer le cylindre (32) au corps (18) de l'étrier, et en ce qu'une deuxième matière de friction pour frein formant le piston (106) est montée à coulissement dans l'évidement (34) de l'étrier et est mobile en translation alternative dans cet évidement en réponse à une pression hydraulique de serrage du frein établie dans la chambre de pression hydraulique (100), pour appliquer une surface de freinage par friction (28) située sur l'autre face du disque (12) lorsque l'ensemble frein est actionné.

2. Ensemble frein à disque selon la revendication 1, caractérisé en ce que la deuxième matière de friction pour frein formant le piston (106) est séparée du fluide de freinage hydraulique contenu dans la chambre de pression (100) à l'aide d'un chapeau de piston (112).

3. Ensemble frein à disque selon la revendication 1 ou la revendication 2, caractérisé en ce que la première matière de friction pour frein qui forme une garniture de frein (126) est fixée d'une manière amovible directement sur la deuxième branche (22) et y est retenue à l'aide d'une agrafe de retenue (148).

0 087 876

Fig.1

Fig.2

1

Fig.3